# EUROPÄISCHE PATENTSCHRIFT

(11) **EP 4 045 386 B1**
(45) Veröffentlichungstag und Bekanntmachung des Hinweises auf die Patenterteilung: **23.07.2025**
(21) Anmeldenummer: 20764307.3
(22) Anmeldetag: 13.08.2020
(51) Int. Cl.: B62D 25/06, B62D 27/02

(54) **FAHRZEUGDACH MIT DACHELEMENT UND VERFAHREN ZUR HERSTELLUNG EINES FAHRZEUGDACHELEMENTS**
VEHICLE ROOF HAVING A ROOF ELEMENT AND METHOD FOR PRODUCING A VEHICLE ROOF ELEMENT
TOIT DE VÉHICULE DOTÉ D'UN ÉLÉMENT DE TOIT ET PROCÉDÉ DE FABRICATION D'UN ÉLÉMENT DE TOIT DE VÉHICULE

(30) Priorität: 18.10.2019 DE 102019128190
(43) Veröffentlichungstag der Anmeldung: 24.08.2022
(73) Patentinhaber: Webasto SE, 82131 Stockdorf (DE)
(72) Erfinder: SCHLUSE, Kevin, 82131 Stockdorf (DE)
(74) Vertreter: advotec.
(86) Internationale Anmeldenummer: PCT/EP2020/072775
(87) Internationale Veröffentlichungsnummer: WO 2021/073796

(56) Entgegenhaltungen:
- DE-A1- 102017 010 622
- US-A1- 2010 276 969

## Beschreibung

Die Erfindung betrifft ein Fahrzeugdach mit den Merkmalen des Oberbegriffs des Patentanspruches 1 und ein Verfahren zur Herstellung eines Fahrzeugdachelements.

Aus der Praxis ist ein Fahrzeugdach bekannt, das als Dachaußenhautelement ein Festdachelement umfasst, welches starr gegenüber einem Fahrzeugaufbau bzw. einer Fahrzeugkarosserie angeordnet ist und ein flächiges Paneel aus Glas, Kunststoff oder Blech aufweist. An das Paneel ist über einen aus einem Polyurethanschaum gebildeten Formabschnitt ein Verbindungsblech angebunden. Mittels des Verbindungsblechs ist es möglich, das Dachelement karosseriefest zu befestigen. Die Anbindung des Verbindungsblechs an das Paneel erfolgt bisher in einem Formwerkzeug, das zur Ausbildung des Formabschnitts eine Kavität aufweist. Ein solches Formwerkzeug ist teuer, was sich wiederum in den Kosten des resultierenden Fahrzeugdachs niederschlägt.

Alternativ ist es bekannt, ein Glaspaneel, das Bestandteil eines Festdachelements ist, mit einem Rahmen aus Polyurethanschaum zu versehen, über den die Anbindung an einen Fahrzeugrohbau erfolgt. Zur Herstellung des Rahmens wird ein Formwerkzeug mit einer Kavität eingesetzt, deren Wände mit einem Trennmittel versehen werden. Um aber den Rahmen aus dem Polyurethanschaum mit dem Fahrzeugrohbau verkleben zu können, ist es erforderlich, ihn nach seiner Herstellung von Trennmittelrückständen zu befreien und so mechanisch für den Klebeprozess vorzubereiten, was sich aufwändig gestalten kann. Das Trennmittel in dem Formwerkzeug ist aber erforderlich, um den in dem Formwerkzeug gefertigten Formabschnitt entformen zu können.

Aus der Druckschrift US 2010/0276969 A1 ist ein Dachelement eines Kraftfahrzeugs bekannt, das ein flächiges Panel umfasst, an dessen Innenseite Deckelinnenbleche angeordnet sind, die jeweils Flansche aufweisen, die über Klebebänder mit dem Panel verklebt sind. Zwischen den Deckelinnenblechen und dem Panel ist jeweils eine Kavität ausgebildet, die mit PU-Formmaterial ausgefüllt ist. Bei der Herstellung wird das PU-Formmaterial über ein Loch des betreffenden Deckelinnenblechs in die Kavität eingebracht. Hierbei wird über ein zweites Loch des Deckelinnenblechs Luft aus der Kavität verdrängt.

Der Erfindung liegt die Aufgabe zugrunde, ein Fahrzeugdach mit einem Dachelement zu schaffen, das kostengünstig herstellbar ist und das ohne weitere Vorbehandlung mit einem Fahrzeugaufbau verbindbar ist, sowie ein Verfahren zur Herstellung eines derartigen Fahrzeug-Dachelements zu schaffen.

Diese Aufgabe ist erfindungsgemäß durch das Fahrzeugdach mit den Merkmalen des Patentanspruches 1 und das Verfahren mit den Merkmalen des Patentanspruches 10 gelöst.

Mit der Erfindung wird also ein Fahrzeugdach vorgeschlagen, das ein Dachelement umfasst, welches ein flächiges Paneel aus Glas, Kunststoff oder Blech sowie ein Verbindungsblech aufweist, das über einen Formabschnitt an die Innenseite des Paneels angebunden ist. Das Verbindungsblech liegt über Anlageflansche lose und dichtend an der Innenseite des Paneels an und begrenzt zusammen mit der Innenseite des Paneels eine Kavität, die von dem Formabschnitt ausgefüllt ist, der das Verbindungsblech an dem Paneel hält. Das Verbindungsblech ist an seinen außerhalb der Kavität angeordneten Flächen formabschnittsfrei, d. h. das Material, das das Verbindungsblech an dem Paneel fixiert, ist nur in der Kavität enthalten.

Bei dem Fahrzeugdach nach der Erfindung ist damit zur Herstellung des Formabschnitts kein komplexes Formwerkzeug erforderlich, das eine Kavität für den Formabschnitt ausbildet. Vielmehr wird die Kavität, in der der Formabschnitt ausgeformt wird, durch das Dachelement selbst, d. h. durch das flächige Paneel und durch das Verbindungsblech definiert. Die Herstellung derartiger Dachelemente kann mit kurzen Taktzeiten erfolgen. Da das Verbindungsblech direkt an einen Fahrzeugaufbau angebunden werden kann, kann auf eine aufwändige Nachbearbeitung des mit dem Verbindungsblech versehenen Paneels vor der Montage verzichtet werden. Trennmittel innerhalb einer Kavität sind auch nicht erforderlich. Bei der Ausformung des Formabschnitts bzw. der Anbindung des Verbindungsblechs an das Paneel muss das Verbindungsblech lediglich gegen die Innenseite des Paneels gedrückt werden, so dass Dichtflächen zwischen dessen Anlageflanschen und dem Paneel resultieren.

Unter dem Begriff "Formabschnitt" ist ein Abschnitt des Fahrzeugdachs nach der Erfindung zu verstehen, der nach einem Kunststoffformverfahren, insbesondere nach einem Spritzgießprozess oder einem Schäumprozess hergestellt ist, bei dem ein Kunststoffwerkstoff in gießfähiger Form in einen Formhohlraum bzw. eine Kavität eingebracht wird und dort aushärtet. Dies ist beispielsweise bei einem RIM (Reaction Injection Molding)-Prozess der Fall. Im vorliegenden Fall ist der Formhohlraum bzw. die Kavität durch das Paneel einerseits und das Verbindungsblech andererseits definiert bzw. begrenzt.

Bei einer bevorzugten Ausführungsform des Fahrzeugdachs nach der Erfindung sind das Verbindungsblech und die Kavität rahmenartig ausgebildet, wobei sie umlaufend den Rändern des Paneels folgen. Das Verbindungsblech kann damit mittels einer einzigen Kavität umlaufend an das Paneel angebunden sein.

Um eine einfache Herstellung des Fahrzeugdachs nach der Erfindung zu erlauben, weist das Verbindungsblech zweckmäßigerweise zwei Öffnungen auf, die die Kavität mit der Umgebung verbinden. Über eine der Öffnungen erfolgt der Anguss, d. h. das Einbringen des Werkstoffs, aus dem der Formabschnitt gebildet wird. Über die andere der Öffnungen erfolgt eine Entlüftung beim Einbringen des Werkstoffs. Luft kann also durch den eingebrachten Werkstoff aus der Kavität verdrängt werden. Es versteht sich, dass zumindest im Bereich einer der Öffnungen auch an der Außenseite des Verbindungsblechs Werkstoffreste bzw. -rückstände vorliegen, die insbesondere werkzeugbedingt bei der Ausformung des Formabschnitts entstehen. Solche Reste bzw. Rückstände, die beispielsweise dom- oder pilzförmig sind, sind im Sinne der Erfindung aber nicht als Formabschnitt anzusehen, der an einer Fläche des Verbindungsblechs angeordnet ist, die außerhalb der Kavität liegt.

Um sicherzustellen, dass bei der Herstellung des Formabschnitts kein Material aus der Kavität austritt, sind zwischen den Anlageflanschen und dem Paneel bei einer vorteilhaften Ausführungsform des Fahrzeugdachs nach der Erfindung Dichtelemente angeordnet, die lose und dichtend an der Innenseite des Paneels anliegen. Es liegt kein Stoffschluss zwischen den Dichtelementen und dem Paneel vor, sondern lediglich Formschluss.

Bei einer speziellen Ausführungsform des Fahrzeugdachs nach der Erfindung ist das Dachelement ein Festdachelement, das starr bzw. nicht verlagerbar mit dem Fahrzeugaufbau verbunden ist.

Um das Festdachelement an den Fahrzeugaufbau anbinden zu können, hat es bei einer speziellen Ausführungsform eine umlaufende Klebefläche zum Anbinden an einen Fahrzeugaufbau. Das Verbindungsblech kann dann einen Außenring des flächigen Paneels darstellen, welcher eine homogene, klebefähige Oberfläche hat. Das Verbindungsblech kann zudem die Steifigkeit des flächigen Paneels erhöhen.

Die Klebefläche kann eine insbesondere stufenfreie Rahmenfläche bilden, welche das flächige Paneel umschließt und damit bezogen auf den Mittelpunkt des flächigen Paneels außen angeordnet ist.

Um eine montagefreundliche Auflage- und Klebefläche an dem Verbindungsblech bereitzustellen, ist die Klebefläche bei einer speziellen Ausführungsform des Fahrzeugdachs nach der Erfindung an einer bezogen auf einen Mittelpunkt des Festdachelements außen liegenden Abkantung des Verbindungsblechs ausgebildet.

Bei einer zweckmäßigen Ausführungsform weist das Fahrzeugdach nach der Erfindung eine fahrzeugfeste bzw. karosseriefeste Unterkonstruktion auf, auf der das Festdachelement über eine Kleberaupe befestigt ist, die an der Klebefläche angeordnet ist. Die Dachunterkonstruktion kann von einem Dachrahmen oder dergleichen gebildet sein und ist gegenüber dem Fahrzeugaufbau bzw. der Fahrzeugkarosserie starr angeordnet.

Das Verbindungsblech kann einstückig ausgebildet sein, d. h. als einstückiges Metall-Stanz-Biegeteil gefertigt sein, was mit kurzen Taktzeiten verbunden ist. Alternativ ist es natürlich auch denkbar, dass das Verbindungsblech aus mehreren Schenkelelementen zusammengesetzt ist, die beispielsweise über Schweißnähte miteinander verbunden sind und im verfügten Zustand ein rahmenartiges Element bilden.

Das Verbindungsblech kann zudem eine Mehrfachfunktion haben und neben der Anbindung an den Fahrzeugaufbau auch zur Halterung eines Funktionselements dienen. In diesem Falle kann das Verbindungsblech einen Fixierabschnitt zur Anbindung des Funktionselements aufweisen, welches insbesondere ein Element einer Beschattungsanordnung sein kann.

Die Erfindung hat auch ein Verfahren zur Herstellung eines Fahrzeugdachelements zum Gegenstand, das ein flächiges Paneel aus Glas, Kunststoff oder Blech und ein Verbindungsblech zur Anbindung des Dachelements an einen Fahrzeugaufbau aufweist, umfassend folgende Schritte:
- Bereitstellen des Paneels;
- Anlegen des Verbindungsblechs an eine Innenseite des Paneels, so dass sich zwischen dem Verbindungsblech und dem Paneel eine Kavität ausbildet und das Verbindungsblech über Anlageflansche lose und dichtend an der Innenseite des Paneels anliegt;
- Einbringen eines Formwerkstoffs in die Kavität über eine Angussöffnung des Verbindungsblechs, so dass sich in der Kavität ein Formabschnitt ausbildet, der alleine das Verbindungsblech an dem Paneel fixiert.

Das Verfahren nach der Erfindung kann insbesondere in einer Vorrichtung erfolgen, die ein Haltewerkzeug aufweist, die das Verbindungsblech beim Ausformen des Formabschnitts positionsfest an der Innenseite des Paneels hält, und vorzugsweise zusätzlich mit einer Halteeinrichtung für das Paneel versehen ist. Beispielsweise umfasst die Vorrichtung ein Unterwerkzeug, das das Paneel positionsfest hält, und ein Oberwerkzeug, das das Haltewerkzeug für das Verbindungsblech bildet.

Zusätzlich weist die Vorrichtung zur Anbindung des Verbindungsblechs an das Paneel vorzugsweise eine Angusseinrichtung auf, mittels der der Werkstoff über die Angussöffnung in die Kavität eingebracht werden kann.

Bei einer speziellen Ausführungsform des Verfahrens nach der Erfindung erfolgt das Einbringen des Formwerkstoffs in die Kavität nach einem RIM (Reaction In Mould)-Prozess, d. h. nach einem Verfahren, bei dem der Werkstoff unter Hochdruck in der Kavität eingebracht wird, dort chemisch reagiert und aushärtet.

Das Entlüften der Kavität beim Ausformen bzw. Einbringen des Formwerkstoffs in die Kavität, kann über eine Entlüftungsöffnung erfolgen, die ebenfalls an dem Verbindungsblech ausgebildet sein kann.

Um zu gewährleisten, dass kein Formwerkstoff aus der Kavität austritt, können die Anlageflansche des Verbindungsblechs mit Dichtelementen versehen werden, über die sie an das Paneel angelegt werden.

Der Formwerkstoff, aus dem der Formabschnitt gebildet wird, ist insbesondere ein Polyurethan-Werkstoff, der nach einem Schäumprozess in der Kavität, die von dem Verbindungsblech und dem Paneel begrenzt ist, einen Polyurethanschaum ausbildet.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Fahrzeugdachs nach der Erfindung ist in der Zeichnung schematisch vereinfacht dargestellt und wird in der nachfolgenden Beschreibung näher erläutert. Es zeigt:
- Figur 1: eine schematische Draufsicht auf ein Fachzeugdach mit einem Festdachelement;
- Figur 2: eine Unteransicht des Festdachelements;
- Figur 3: einen Schnitt durch das Festdachelement im Randbereich; und
- Figur 4: einen Schnitt durch das Festdachelement entlang der Linie IV-IV in Figur 2 bei dessen Fertigung.

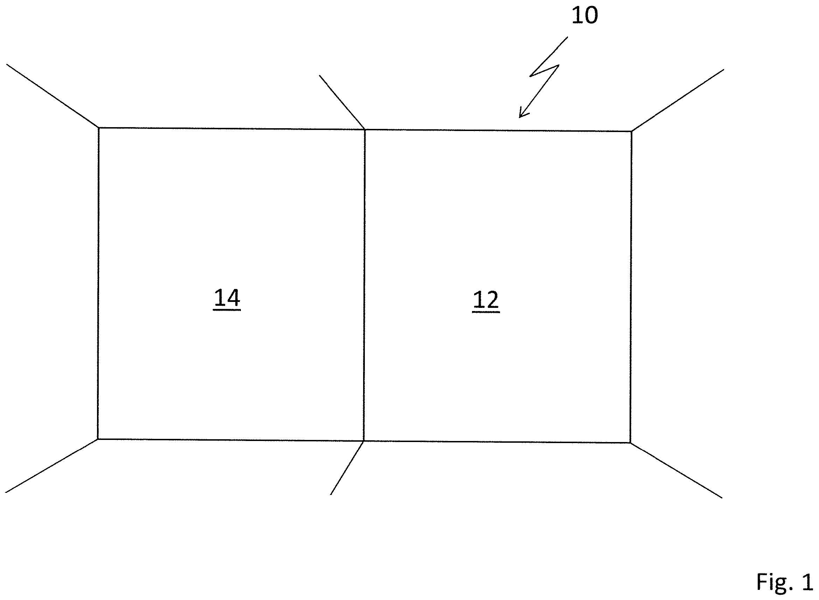

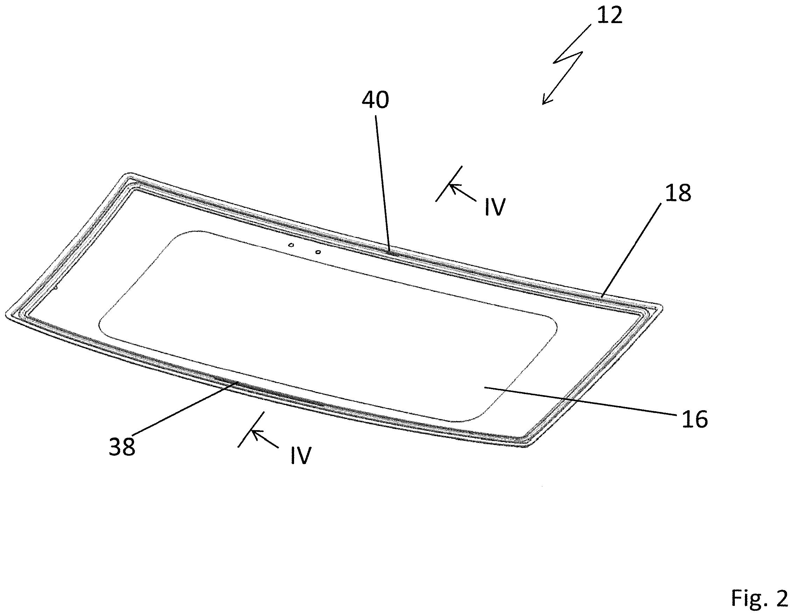

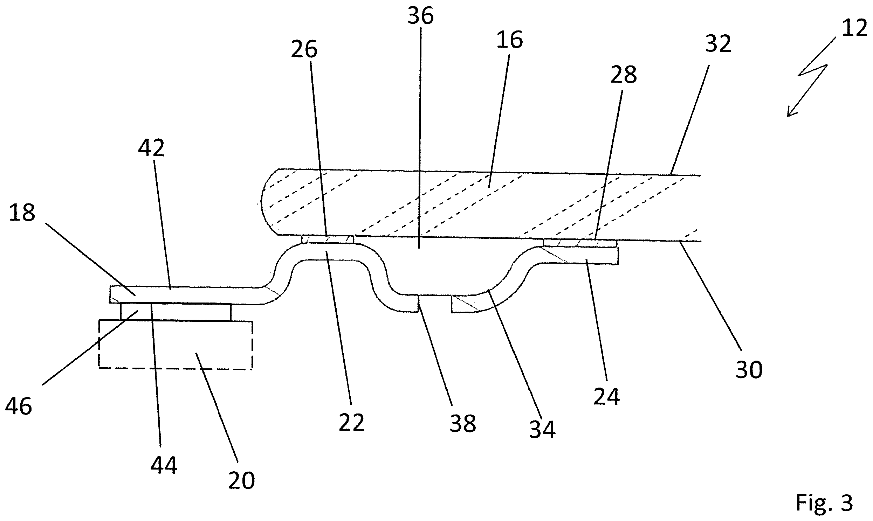

In Figur 1 ist ein Dach 10 eines nicht näher dargestellten Personenkraftwagens gezeigt, das als Panoramadach ausgebildet ist und ein Festdachelement 12 aufweist, das sich vom heckseitigen Rand des Daches 10 bis in einen mittleren Bereich des Daches 10 erstreckt. Bugseitig von dem Festdachelement 12 ist eine Dachöffnung ausgebildet, die mittels eines verlagerbaren Deckelelements 14 verschließbar ist. Das Deckelelement 14 kann mittels einer nicht näher dargestellten Verstellkinematik zwischen der in Figur 1 dargestellten Schließstellung und einer Öffnungsstellung verstellt werden, in der die Dachöffnung zumindest teilweise freigegeben ist und das Deckelelement 14 über das Festdachelement 12 verfahren ist. Das in den Figuren 2 und 3 in Alleinstellung dargestellte Festdachelement 12 umfasst ein Glaspaneel 16, das ein Dachaußenhautelement bildet und gewölbt ausgebildet ist. An seinen umlaufenden Rand ist das Glaspaneel 16 mit einem umlaufenden, rahmenartigen Verbindungsblech 18 versehen, das zur Fixierung des Festdachelements 12 an einer fahrzeugfesten Dachunterkonstruktion 20 dient und als einstückiges Stanz-Biegeteil aus Stahl oder auch aus einem Leichtmetall ist.

Das Verbindungsblech 18 umfasst zwei rahmenartig verlaufende Anlageflansche 22 und 24, die jeweils mit einem Dichtungselement 26 bzw. 28 versehen sind, das lose an einer Innenseite 30 des Glaspaneels 16 anliegt. Die Innenseite 30 des Glaspaneels 16 ist einem Fahrzeuginnenraum zugewandt. An der der Innenseite 30 abgewandten Außenseite 32 bildet das Glaspaneel 16 die äußere Sichtfläche des Festdachelements 12.

Zwischen den beiden Dichtungselementen 26 und 28 bzw. den beiden Anlageflanschen 22 und 24 begrenzt das Verbindungsblech 18 zusammen mit der Innenseite 30 des Glaspaneels 16 eine rahmenartige, umlaufende Kavität 34, welche dem Verlauf des umlaufenden, rahmenartigen Verbindungsblechs 18 folgt. Die Kavität 34 ist von einem Formabschnitt 36 ausgefüllt, der aus einem Polyurethanschaumwerkstoff gebildet ist und der das Verbindungsblech 18 an dem Glaspaneel 16 fixiert.

Zur Ausformung des Formabschnitts 36 weist das Verbindungsblech 18 in dem Bereich zwischen den beiden Anlageflanschen 22 und 24 an einem Rahmenschenkel eine Angussöffnung 38, die schlitzartig ausgebildet ist, und an einem zweiten Rahmenschenkel eine Entlüftungsöffnung 40 auf.

Des Weiteren hat das Verbindungsblech 18 einen bezogen auf den Mittelpunkt des Glaspaneels 16 außen angeordneten Auflageflansch 42, an dessen Unterseite eine umlaufende Klebefläche 44 ausgebildet ist. Über die Klebefläche 44 ist das Festdachelement 12 mittels einer Kleberaupe 46 mit der Dachunterkonstruktion 20 verklebt.

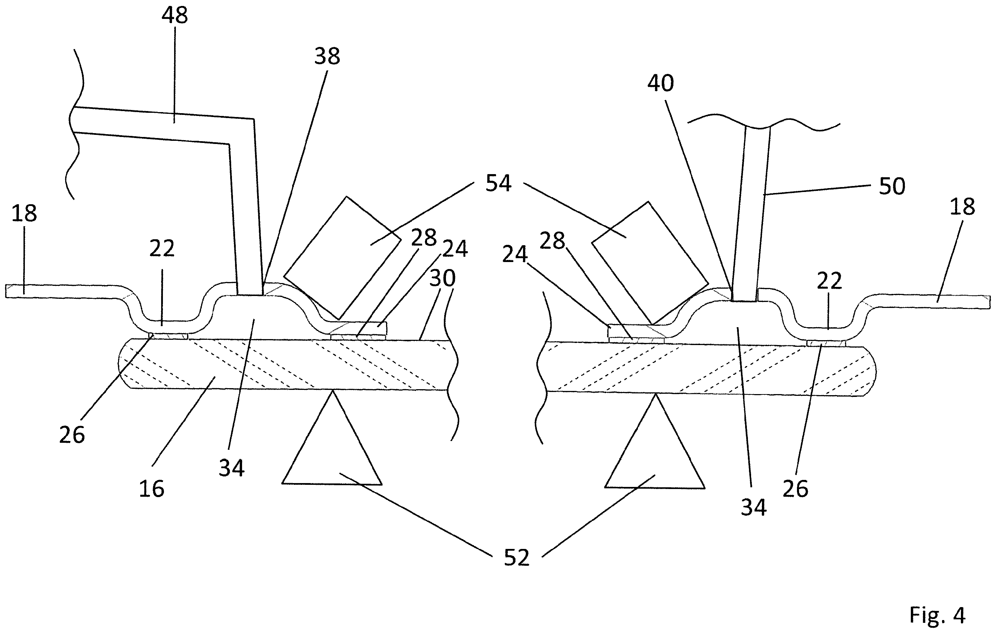

Die Herstellung des Festdachelements 12 erfolgt unter Bezugnahme auf Figur 4 in nachfolgend beschriebener Weise.

In einem ersten Verfahrensschritt wird das Glaspaneel 16 mit der Innenseite 30 nach oben in eine Haltevorrichtung 52 eingelegt und gesichert. Anschließend wird mittels eines Haltewerkzeugs 54 das Verbindungsblech 18 über die Dichtungselemente 26 und 28, die an den Anlageflanschen 22 und 24 befestigt sind, lose und dichtend an die Innenseite 30 des Glaspaneels 16 gedrückt.

Nachfolgend wird eine Schäumvorrichtung 48 an die Angussöffnung 38 und eine Entlüftungseinrichtung 50 an die Entlüftungsöffnung 40 herangeführt. Dann wird mittels der Schäumvorrichtung 48 ein Polyurethanschaumwerkstoff in die Kavität 34 eingebracht, die zwischen dem Verbindungsblech 18 und der Innenseite 30 des Glaspaneels 16 ausgebildet ist, wobei gleichzeitig die Luft über die Entlüftungsöffnung 40 bzw. die Entlüftungseinrichtung 50 aus der Kavität 34 verdrängt wird. Das Einbringen des Polyurethanschaumwerkstoffs, der nach dem Aushärten den Formabschnitt 36 bildet, erfolgt nach einem RIM-Prozess unter hohen Drücken.

### Bezugszeichenliste

- 10: Fahrzeugdach
- 12: Festdachelement
- 14: Deckelelement
- 16: Glaspaneel
- 18: Verbindungsblech
- 20: Dachunterkonstruktion
- 22: Anlageflansch
- 24: Anlageflansch
- 26: Dichtungselement
- 28: Dichtungselement
- 30: Innenseite
- 32: Außenseite
- 34: Kavität
- 36: Formabschnitt
- 38: Angussöffnung
- 40: Entlüftungsöffnung
- 42: Anlageflansch
- 44: Klebefläche
- 46: Kleberaupe
- 48: Schäumvorrichtung
- 50: Entlüftungseinrichtung
- 52: Haltevorrichtung
- 54: Haltewerkzeug

## Patentansprüche

1. Fahrzeugdach, umfassend ein Dachelement mit einem flächigen Paneel (16) aus Glas, Kunststoff oder Blech, das eine einer Fahrzeugumgebung zugewandte Außenseite (32) und eine einem Fahrzeuginnenraum zugewandte Innenseite (30) hat, und mit einem Verbindungsblech (18), das über einen Formabschnitt (36) an die Innenseite (30) des Paneels (16) angebunden ist, **dadurch gekennzeichnet, dass** das Verbindungsblech (18) über Anlageflansche (22, 24) lose und dichtend an der Innenseite (30) des Paneels (16) anliegt und zusammen mit der Innenseite (30) des Paneels (16) eine Kavität (34) begrenzt, die von dem Formabschnitt (36) ausgefüllt ist, und dass das Verbindungsblech (18) an seinen außerhalb der Kavität (34) angeordneten Flächen formabschnittsfrei ist.

2. Fahrzeugdach nach Anspruch 1, **dadurch gekennzeichnet, dass** das Verbindungsblech (18) und die Kavität (34) rahmenartig ausgebildet sind und umlaufend den Rändern des Paneels (16) folgen.

3. Fahrzeugdach nach Anspruch 1 oder 2, **dadurch gekennzeichnet, dass** das Verbindungsblech (18) zwei Öffnungen (38, 40) aufweist, die die Kavität (34) mit der Umgebung verbinden.

4. Fahrzeugdach nach einem der Ansprüche 1 bis 3, **dadurch gekennzeichnet, dass** zwischen den Anlageflanschen (22, 24) und dem Paneel (16) Dichtelemente (26, 28) angeordnet sind.

5. Fahrzeugdach nach einem der Ansprüche 1 bis 4, **dadurch gekennzeichnet, dass** das Dachelement ein Festdachelement (12) ist.

6. Fahrzeugdach nach Anspruch 5, **dadurch gekennzeichnet, dass** das Verbindungsblech (18) eine umlaufende Klebefläche (44) zum Anbinden des Festdachelements (12) an einen Fahrzeugaufbau hat.

7. Fahrzeugdach nach Anspruch 6, **dadurch gekennzeichnet, dass** die Klebefläche (44) unterseitig an einem bezogen auf einen Mittelpunkt des Festdachelements (12) außenliegenden Anlageflansch (42) des Verbindungsblechs (18) ausgebildet ist.

8. Fahrzeugdach nach einem der Ansprüche 6 bis 7, **gekennzeichnet durch** eine fahrzeugfeste bzw. karosseriefeste Unterkonstruktion (20), auf der das Festdachelement (12) über eine Kleberaupe (46) befestigt ist, die an der Klebefläche (44) angeordnet ist.

9. Fahrzeugdach nach einem der Ansprüche 1 bis 8, **dadurch gekennzeichnet, dass** das Verbindungsblech (18) einen Fixierabschnitt zur Anbindung eines Funktionselements, insbesondere eines Elements einer Beschattungsanordnung umfasst.

10. Verfahren zur Herstellung eines Fahrzeugdachelements, das ein flächiges Paneel (16) aus Glas, Kunststoff oder Blech und ein Verbindungsblech (18) zur Anbindung des Dachelements an einen Fahrzeugaufbau aufweist, umfassend folgende Schritte:
- Bereitstellen des Paneels (16);
- Anlegen des Verbindungsblechs (18) an eine Innenseite (30) des Paneels (16), so dass sich zwischen dem Verbindungsblech (18) und dem Paneel (16) eine Kavität (34) ausbildet und das Verbindungsblech (18) über Anlageflansche (22, 24) lose und dichtend an der Innenseite (30) des Paneels (16) anliegt; und
- Einbringen eines Formwerkstoffs in die Kavität (34) über eine Angussöffnung (38) des Verbindungsblechs (18), so dass sich in der Kavität (34) ein Formabschnitt (36) ausbildet, der alleine das Verbindungsblech (18) an dem Paneel (16) fixiert.

11. Verfahren nach Anspruch 10, **dadurch gekennzeichnet, dass** das Verbindungsblech (18) beim Ausformen des Formabschnitts (36) mittels eines Haltewerkzeugs (54) gegen die Innenseite des Paneels (16) gedrückt wird.

12. Verfahren nach Anspruch 10 oder 11, **dadurch gekennzeichnet, dass** das Paneel (16) positionsfest gehalten wird.

13. Verfahren nach einem der Ansprüche 10 bis 12, **dadurch gekennzeichnet, dass** das Einbringen des Formwerkstoffs nach einem RIM-Prozess erfolgt.

14. Verfahren nach einem der Ansprüche 10 bis 13, **dadurch gekennzeichnet, dass** die Anlageflansche (22, 24) mit Dichtelementen (26, 28) versehen werden und über die Dichtelemente (26, 28) an das Paneel (16) angelegt werden.

## Claims

1. A vehicle roof comprising a roof element having a planar panel (16) made of glass, plastic or sheet metal, the panel having an outer side (32) facing a vehicle environment and an inner side (30) facing a vehicle interior, and the roof element having a connecting metal plate (18) connected to the inner side (30) of the panel (16) via a molded portion (36), **characterized in that** the connecting metal plate (18) is in loose and sealing contact with the inner side (30) of the panel (16) via contact flanges (22, 24) and defines a cavity (34) together with the inner side (30) of the panel (16), the cavity (34) being filled by the molded portion (36), and **in that** the connecting metal plate (18) is free from molded portions at its surfaces disposed outside the cavity (34).

2. The vehicle roof according to claim 1, **characterized in that** the connecting metal plate (18) and the cavity (34) are of a frame-like design and circumferentially follow the edges of the panel (16).

3. The vehicle roof according to claim 1 or 2, **characterized in that** the connecting metal plate (18) has two openings (38, 40) which connect the cavity (34) to the environment.

4. The vehicle roof according to any one of claims 1 to 3, **characterized in that** sealing elements (26, 28) are disposed between the contact flanges (22, 24) and the panel (16).

5. The vehicle roof according to any one of claims 1 to 4, **characterized in that** the roof element is a fixed roof element (12).

6. The vehicle roof according to claim 5, **characterized in that** the connecting metal plate (18) has a circumferential adhesion surface (44) for connecting the fixed roof element (12) to a vehicle structure.

7. The vehicle roof according to claim 6, **characterized in that** the adhesion surface (44) is formed on an underside of a contact flange (42) of the connecting metal plate (18), said contact flange being an outer contact flange with respect to a center of the fixed roof element (12).

8. The vehicle roof according to any one of claims 6 to 7, **characterized by** a substructure (20) which is attached to the vehicle or the body and to which the fixed roof element (12) is attached via a bead of glue (46) disposed on the adhesion surface (44).

9. The vehicle roof according to any one of claims 1 to 8, **characterized in that** the connecting metal plate (18) comprises a fixing portion for connecting a functional element, in particular an element of a shading assembly.

10. A method for producing a vehicle roof element having a planar panel (16) made of glass, plastic or sheet metal and a connecting metal plate (18) for connecting the roof element to a vehicle structure, the method comprising the following steps:
- providing the panel (16);
- attaching the connecting metal plate (18) to an inner side (30) of the panel (16) so that a cavity (34) forms between the connecting metal plate (18) and the panel (16) and the connecting metal plate (18) is in loose and sealing contact with the inner side (30) of the panel (16) via contact flanges (22, 24); and
- introducing a mold material into the cavity (34) via a gate (38) of the connecting metal plate (18) so that a molded portion (36) forms in the cavity (34), the molded portion (36) alone fixing the connecting metal plate (18) to the panel (16).

11. The method according to claim 10, **characterized in that** the connecting metal plate (18) is pushed against the inner side of the panel (16) by means of a holding tool (54) during the molding of the molded portion (36).

12. The method according to claim 10 or 11, **characterized in that** the panel (16) is held in position.

13. The method according to any one of claims 10 to 12, **characterized in that** the mold material is introduced according to an RIM process.

14. The method according to any one of claims 10 to 13, **characterized in that** the contact flanges (22, 24) are provided with sealing elements (26, 28) and are joined to the panel (16) via the sealing elements (26, 28).

## Revendications

1. Toit de véhicule comprenant un élément de toit comportant un panneau (16) plat en verre, en plastique ou en tôle, le panneau (16) présentant une face extérieure (32) tournée vers l'environnement du véhicule et une face intérieure (30) tournée vers l'intérieur du véhicule, et l'élément de toit comportant une tôle de liaison (18) reliée à la face intérieure (30) du panneau (16) par l'intermédiaire d'une partie moulée (36), **caractérisé en ce que** la tôle de liaison (18) est en contact étanchant non serré avec la face intérieure (30) du panneau (16) via des brides de contact (22, 24) et définit une cavité (34) conjointement avec la face intérieure (30) du panneau (16), la cavité (34) étant remplie par la partie moulée (36), et **en ce que** la tôle de liaison (18) est exempte de parties moulées sur ses surfaces disposées à l'extérieur de la cavité (34).

2. Toit de véhicule selon la revendication 1, **caractérisé en ce que** la tôle de liaison (18) et la cavité (34) sont de conception de cadre et suivent circonférentiellement les bords du panneau (16).

3. Toit de véhicule selon la revendication 1 ou 2, **caractérisé en ce que** la tôle de liaison (18) comporte deux ouvertures (38, 40) qui relient la cavité (34) à l'environnement.

4. Toit de véhicule selon l'une quelconque des revendications 1 à 3, **caractérisé en ce que** des éléments d'étanchéité (26, 28) sont disposés entre les brides de contact (22, 24) et le panneau (16).

5. Toit de véhicule selon l'une quelconque des revendications 1 à 4, **caractérisé en ce que** l'élément de toit est un élément de toit fixe (12).

6. Toit de véhicule selon la revendication 5, **caractérisé en ce que** la tôle de liaison (18) comporte une surface adhésive (44) périphérique pour relier l'élément de toit fixe (12) à une structure du véhicule.

7. Toit de véhicule selon la revendication 6, **caractérisé en ce que** la surface adhésive (44) est formée sur une face inférieure d'une bride de contact (42) de la tôle de liaison (18), ladite bride de contact étant une bride de contact extérieure par rapport à un centre de l'élément de toit fixe (12).

8. Toit de véhicule selon l'une quelconque des revendications 6 à 7, **caractérisé par** une sous-construction (20) qui est fixée au véhicule ou au châssis et à laquelle l'élément de toit fixe (12) est fixé par l'intermédiaire d'un cordon de colle (46) disposé sur la surface adhésive (44).

9. Toit de véhicule selon l'une quelconque des revendications 1 à 8, **caractérisé en ce que** la tôle de liaison (18) comprend une partie de fixation pour relier un élément fonctionnel, notamment un élément d'un dispositif d'ombrage.

10. Procédé de fabrication d'un élément de toit de véhicule comportant un panneau (16) plat en verre, en plastique ou en tôle et une tôle de liaison (18) pour relier l'élément de toit à une structure de véhicule, le procédé comprenant les étapes suivantes :
- fournir le panneau (16) ;
- placer la tôle de liaison (18) en contact avec un face intérieure (30) du panneau (16) de manière à former une cavité (34) entre la tôle de liaison (18) et le panneau (16) et à ce que la tôle de liaison (18) soit en contact étanche non serré avec la face intérieure (30) du panneau (16) via des brides de contact (22, 24) ; et
- introduire un matériau de moulage dans la cavité (34) via une carotte (38) de la tôle de liaison (18) de manière à former une partie moulée (36) dans la cavité (34), la partie moulée (36) fixant à elle seule la tôle de liaison (18) au panneau (16).

11. Procédé selon la revendication 10, **caractérisé en ce que** la tôle de liaison (18) est poussée contre la face intérieure du panneau (16) au moyen d'un outil de maintien (54) pendant le moulage de la partie moulée (36).

12. Procédé selon la revendication 10 ou 11, **caractérisé en ce que** le panneau (16) est maintenu en position.

13. Procédé selon l'une quelconque des revendications 10 à 12, **caractérisé en ce que** le matériau de moulage est introduit selon un procédé RIM.

14. Procédé selon l'une quelconque des revendications 10 à 13, **caractérisé en ce que** les brides de contact (22, 24) sont pourvues d'éléments d'étanchéité (26, 28) et sont placées en contact avec le panneau (16) par l'intermédiaire des éléments d'étanchéité (26, 28).
